# EUROPÄISCHE PATENTANMELDUNG

(11) **EP 2 565 223 A1**
(43) Veröffentlichungstag der Anmeldung: **06.03.2013**
(21) Anmeldenummer: 11179553.0
(22) Anmeldetag: 31.08.2011
(51) Int. Cl.: C08J 9/00, C08J 9/16, C08J 9/232, B29C 44/00, B32B 5/18, C08L 25/06, C08L 25/12, C08L 25/14, C08L 25/16

(54) **Expandierbares Granulat**

(71) Anmelder: BASF SE, 67056 Ludwigshafen (DE)
(72) Erfinder: Bellin, Ingo, Dr., 68307 Mannheim (DE); Hahn, Klaus, Dr., 67281 Kirchheim (DE); Ruckdäschel, Holger, Dr.-Ing., 67487 St Martin (DE); Hartenstein, Markus, Dr., 76761 Rülzheim (DE); Terrenoire, Alexandre, Dr., 55576 Sprendlingen (DE); Sandler, Jan Kurt Walter, Dr., 69126 Heidelberg (DE)
(74) Vertreter: Rippel, Hans Christoph

(57) **Zusammenfassung**

Ein expandierbares Granulat (G) mit einem Stickstoffanteil von ≤ 8 Gew.-% [bezogen auf (G)], dessen Partikel jeweils mindestens 10 Hohlräume pro mm³ im Größenbereich von 1 bis 200 µm enthalten und das eine Polymerkomponente (P) mit einer Glasübergangstemperatur im Bereich von > 105 °C enthält, gebildet aus
PS)
75 bis 100 Gew.-% (bezogen auf P) einer Styrolpolymerkomponente, die gebildet ist aus
PS1)
10 bis 100 Gew.-% (bezogen auf P) an einem oder mehreren Styrolpolymeren, enthaltend jeweils
PS11)
60 bis 100 Gew.-% (bezogen auf PS1) einpolymerisiertes Styrol (PS111) oder alpha-Methylstyrol (PS112) oder eine einpolymerisierte Mischung aus alpha-Methylstyrol und Styrol (PS113),
PS12)
0 bis 40 Gew.-% (bezogen auf PS1) mindestens eines einpolymerisierten Monomers aus der Gruppe Maleinsäureanhydrid, Maleinimide, (C₁-C₁₀)-Alkyl(meth)acrylate und (Meth)acrylsäure,
PS2)
0 bis 90 Gew.-% (bezogen auf P) an einem oder mehreren von PS1 unterschiedlichen Styrolcopolymeren, enthaltend
PS21)
60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
PS22)
18 bis 40 Gew.% (bezogen auf PS2) einpolymerisiertes Acrylnitril

und
PT)
0 bis 25 Gew.-% (bezogen auf P) an einem oder mehreren thermoplastischen Polymeren aus der Gruppe bestehend aus aromatischen Polyethern, Polyolefinen, Polyacrylaten, Polycarbonaten (PC), Polyestern, Polyamiden, Polyethersulfonen (PES), Polyetherketonen (PEK) und Polyethersulfiden (PES),

mit der Maßgabe, dass neben der Komponente PS11) mindestens eine der Komponenten PS12), PS2) und PT in einem Anteil von mindestens 5 Gew.-% (bezogen jeweils auf PS1), PS beziehungsweise P) vorhanden sein muss,
eignet sich zur Herstellung von Partikelschaumformteilen, die insbesondere für den Einsatz in Verbundformteilen im Möbelbau geeignet sind.

## Beschreibung

Die Erfindung betrifft expandierbare Granulate enthaltend styrolhaltige Polymere und Blends mit styrolhaltigen Polymeren" Verfahren zu deren Herstellung, Partikelschäume und Partikelschaumformteile, erhältlich aus den expandierbaren Granulaten sowie die Verwendung der Schäume und Schaumformteile insbesondere in Verbundformteilen für den Möbelbau.

Partikelschaumstoffe auf Basis von Styrolcopolymeren werden aufgrund ihres geringen Gewichtes und ihrer guten Isolationseigenschaften in vielen Bereichen der Technik eingesetzt (siehe z.B. WO 2005/056652 und WO 2009/000872).

In der JP-A 2010-229205 ist die Herstellung expandierbarer Granulate beschrieben, bei denen mindestens eine Komponente eine Glasübergangstemperatur von mindestens 110 °C besitzt. In den Beispielen werden Blends aus Polystyrol (PS) mit einem höherwarmformbeständigen Polymeren wie SMA oder PPE genutzt. Durch den Zusatz von PS verbessern sich die Schaumverarbeitungseigenschaften und reduzieren sich die Materialkosten. Als Herstellverfahren ist ein Schmelzeimprägnierverfahren mit Unterwassergranulierung beschrieben.

In der WO 2009/112392 ist ein Verbundsformteil, insbesondere für den Möbelbau beschrieben, enthaltend eine Kernschicht und eine oder mehrere weitere Schichten, wobei die Kernschicht als Partikelschaumformteil ausgebildet ist, erhältlich durch Verschweißen von vorgeschäumten Schaum partikeln aus expandierbaren, thermoplastischen Polymergranulaten, enthaltend 5 bis 100 Gew.-% einer SAN-Komponente (A) enthaltend a1) 5 bis 100 Gew.-% (bezogen auf A) eines Styrol/Acrylnitril-Copolymeren a2) 0 bis 95 Gew.-% (bezogen auf A) eines alpha-Methylstyrol/Acrylnitril-Copolymeren und/oder alpha-Methylstyropol/Styrol/Acrylnitril-Tetpolymeren; 0 bis 95 Gew.-% Polystyrol (B) oder 0 bis 95 Gew.-% eines von (A) und (B) verschiedenen thermoplastischen Polymere (C).

Obwohl mit den bekannten, im Möbelbau eingesetzten Schaumstoffen bereits gute Ergebnisse erzielt werden, bleibt doch ein breiter Raum für Verbesserungen, insbesondere was eine Kombination aus niedriger Dichte mit guter Verarbeitbarkeit und günstigen anwendungstechnischen Eigenschaften, wie Wärmeformbeständigkeit, Druck- und Biegefestigkeit, angeht.

Insbesondere bleibt bei der Herstellung von Sandwichplatten, die einen Kern aus einem Schaummaterial enthalten, noch Raum für Verbesserung was die Wärmeformbeständigkeit, eine möglichst geringe NOₓ-Emission beim Verbrennen und die Kantendruckfestigkeit angeht.

Es wurde gefunden, dass sich Partikelschäume mit einer hohen Wärmeformbeständigkeit bei gleichzeitig günstigen anwendungstechnischen Eigenschaften und geringen NOₓ-Emissionen beim Verbrennen erhalten lassen, wenn bestimmte Styrolcopolymere mit hohen Erweichungspartikeln und einem niedrigen Stickstoffgehalt eingesetzt werden.

Gegenstand der Erfindung ist ein expandierbares Granulat (G) mit einem Stickstoffanteil von ≤ 8 Gew.-% [bezogen auf (G)], dessen Partikel jeweils mindestens 10 Hohlräume pro mm³ im Größenbereich von 1 bis 200 µm enthalten und das eine Polymerkomponente (P) mit einer Glasübergangstemperatur von > 105 °C enthält, gebildet aus
- PS): 75 bis 100 Gew.-% (bezogen auf P) einer Styrolpolymerkomponente, die gebildet ist aus
- PS1): 10 bis 100 Gew.-% (bezogen auf P) an einem oder mehreren Styrolpolymeren, enthaltend jeweils
- PS11): 60 bis 100 Gew.-% (bezogen auf PS1) einpolymerisiertes Styrol (PS111) oder alpha-Methylstyrol (PS112) oder eine einpolymerisierte Mischung aus alpha-Methylstyrol und Styrol (PS113),
- PS12): 0 bis 40 Gew.-% (bezogen auf PS1) mindestens eines einpolymerisierten Monomers aus der Gruppe Maleinsäureanhydrid, Maleinimide, (C₁-C₁₀)-Alkyl(meth)acrylate und (Meth)acrylsäure,
- PS2): 0 bis 90 Gew.-% (bezogen auf P) an einem oder mehreren von PS1 unterschiedlichen Styrolcopolymeren, enthaltend
- PS21): 60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
- PS22): 18 bis 40 Gew.% (bezogen auf PS2) einpolymerisiertes Acrylnitril
und
- PT): 0 bis 25 Gew.-% (bezogen auf P) an einem oder mehreren thermoplastischen Polymeren aus der Gruppe bestehend aus aromatischen Polyethern, Polyolefinen, Polyacrylaten, Polycarbonaten (PC), Polyestern, Polyamiden, Polyethersulfonen (PES), Polyetherketonen (PEK) und Polyethersulfiden (PES),

mit der Maßgabe, dass neben der Komponente PS11) mindestens eine der Komponenten PS12, PS2 und PT in einem Anteil von mindestens 5 Gew.-% (bezogen jeweils auf PS1, PS beziehungsweise P) vorhanden sein muss.

Weiterhin Gegenstand der Erfindung ist ein Verfahren zur Herstellung des erfindungsgemäßen Granulats, umfassend die Schritte:
a) Bereitstellen einer Polymerkomponente (P), mit einer Glasübergangstemperatur von > 105 °C , gebildet aus
   - PS): 75 bis 100 Gew.-% (bezogen auf P) einer Styrolpolymerkomponente, die gebildet ist aus
   - PS1): 10 bis 100 Gew.-% (bezogen auf P) an einem oder mehreren Styrolpolymeren, enthaltend jeweils
   - PS11): 60 bis 100 Gew.-% (bezogen auf PS1) einpolymerisiertes Styrol (PS111) oder alpha-Methylstyrol (PS112) oder eine einpolymerisierte Mischung aus alpha-Methylstyrol und Styrol (PS113),
   - PS12): 0 bis 40 Gew.-% (bezogen auf PS1) mindestens eines einpolymerisierten Monomers aus der Gruppe Maleinsäureanhydrid, Maleinimide, (C₁-C₁₀)-Alkyl(meth)acrylate und (Meth)acrylsäure,
   - PS2): 0 bis 90 Gew.-% (bezogen auf P) an einem oder mehreren von PS1 unterschiedlichen Styrolcopolymeren, enthaltend
   - PS21): 60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
   - PS22): 18 bis 40 Gew.% (bezogen auf PS2) einpolymerisiertes Acrylnitril
   - PT): 0 bis 25 Gew.-% (bezogen auf P) an einem oder mehreren thermoplastischen Polymeren aus der Gruppe bestehend aus aromatischen Polyethern, Polyolefinen, Polyacrylaten, Polycarbonaten (PC), Polyestern, Polyamiden, Polyethersulfonen (PES), Polyetherketonen (PEK) und Polyethersulfiden (PES),
   mit der Maßgabe, dass neben der Komponente PS11) mindestens eine der Komponenten PS12, PS2 und PT in einem Anteil von mindestens 5 Gew.-% (bezogen jeweils auf PS1, PS beziehungsweise P) vorhanden sein muss.
   - (b): Erhitzen der Polymerkomponente (P) zur Ausbildung einer Polymerschmelze,
   - (c): Einbringen von 1 bis 10 Gew.-% (bezogen auf P) einer Treibmittelkomponente (T), in die Polymerschmelze zur Ausbildung einer schäumbaren Schmelze,
   - (d): Homogenisieren der Mischung,
   - (e): gegebenenfalls Zugabe von Additiven zu der Polymerkomponente P in mindestens einem der Schritte a), b), c) und/oder d),
   - (f): Extrusion der treibmittelhaltigen Polymerschmelze durch eine Düsenplatte,
   - (g): Granulieren der treibmitteilhaltigen Schmelze in einer flüssigkeitsgefüllten Kammer unter einem Druck von 1,5 bis 15 bar zu einem Granulat, dessen Partikel jeweils mindestens 10 Hohlräume pro mm³ im Größenbereich von 1 bis 200 µm enthalten,
wobei der Stickstoffgehalt des fertigen Granulats ≤ 8 Gew.-% beträgt.

Ebenso Gegenstand der Erfindung ist ein Formteil, erhältlich aus dem erfindungsgemäßen Granulat sowie dessen Verwendung als Isolationsmaterial für technische Anwendungen und den Baubereich sowie insbesondere in Verbundformteilen für den Möbelbau. Weitere Anwendungen liegen in der Automobilindustrie, im Boots- und/oder Schiffsbau, beim Bau von Windkraftanlagen und im Messebau.

Formteile aus dem erfindungsgemäßen Granulat zeichnen sich durch eine Kombination von niedrigerer Dichte, hoher Druck- und Biegefestigkeit, geringen NOₓ-Emissionen beim Verbrennen sowie einer erhöhten Wärmeformbeständigkeit aus.

Aufgrund ihrer guten Wärmeformbeständigkeit im Vergleich zu Materialien wie EPS lassen sich Verbundformteile, die erfindungsgemäße Formteile enthalten, leichter verarbeiten, weisen eine hohe Druck- und Biegefestigkeit auf und erfordern bei Dichten zwischen 40 und 200 g/l keine Rahmenkonstruktion. Sandwichplatten, die das erfindungsgemäße Schaummaterial enthalten, erlauben eine Beschichtung der Kanten nach im Holzbau üblichen Verfahren mit üblichen Werkzeugen und Beschichtungstechniken. Darüber hinaus erlauben Sandwichplatten, die das erfindungsgemäße Schaummaterial enthalten, die Verwendung der üblicherweise im Holzbau eingesetzten Maschinen zum Fräsen, Bohren, Sägen und Hobeln.

Das erfindungsgemäße Granulat weist bevorzugt eine mittlere Partikelgröße von 0,2 bis 2,5 mm auf (analysiert durch Siebanalyse, Bestimmung der mittleren Partikelgröße durch Annahme einer RRSB-Verteilung).

Die Polymerkomponente P weist bevorzugt eine Vicat-Temperatur (gemessen nach ISO 306 VST /B50) im Bereich von 105°C - 200°C, besonders bevorzugt 105°C - 140°C, auf.

Die erfindungsgemäß als Polymerkomponente P eingesetzten Styrolpolymere (PS) und die thermoplastischen Polymere (PT) können nach dem Fachmann bekannten Verfahren, beispielsweise durch radikalische, anionische oder kationische Polymerisation in Substanz, Lösung, Dispersion oder Emulsion hergestellt werden. Bevorzugt ist im Falle von PS die Herstellung durch radikalische Polymerisation.

Die Komponente PS1 besteht aus einem oder mehreren Styrolpolymeren, enthaltend, vorzugsweise bestehend aus,
- PS11): 60 bis 100 Gew.-%, bevorzugt 60 bis 97 Gew.-%, besonders bevorzugt 65 bis 95 Gew.-% (bezogen auf PS1) einpolymerisiertes Styrol (PS121) oder alpha-Methylstyrol (PS122) oder eine einpolymerisierte Mischung aus alpha-Methylstyrol und Styrol (PS123),
- PS12): 0 bis 40 Gew.-%, bevorzugt 3 bis 40 Gew.-%, besonders bevorzugt 5 bis 35 Gew.-% (bezogen auf P1) mindestens eines einpolymerisierten Monomers aus der Gruppe bestehend aus (C₁-C₁₂)-Alkyl-(meth)acrylaten, (Meth)acrylsäure, Maleinsäureanhydrid und Maleinimiden.

Unter Alkyl(meth)acrylaten sind im Rahmen der Erfindung sowohl Alkylacrylate auch als Alkylmethacrylate zu verstehen. Unter (Meth)acrylsäure ist sowohl Acrylsäure als auch Methacrylsäure zu verstehen.

Bevorzugte Alkyl(meth)acrylate werden gebildet aus (Meth)acrylsäure und C₁-C₈-Alkoholen wie Methanol, Ethanol, 1-Propanol, 2-Propanol, n-Butanol, sec.-Butanol, isoButanol, tert.-Butanol, 1-Pentanol und seinen Isomeren, 1-Hexanol und seinen Isomere, Cyclohexanol sowie Octanol und seinen Isomeren wie 2-Ethylhexanol.

Bevorzugte Maleinimide sind Maleinimid selbst, N-Alkyl-substituierte Maleinimide (vorzugsweise mit C₁-C₆-Alkyl) und N-Phenyl-substituierte Maleinimide.

In einer bevorzugten Ausführungsform enthält die Komponente PS1) 60 bis 95 Gew.-%, bevorzugt 65 bis 95 Gew.-% (bezogen auf PS1)) an der Komponente PS11), bevorzugt einpolymerisiertes Styrol (PS111)) und 5 bis 40 Gew.-%, bevorzugt 5 bis 35 Gew.-% (bezogen auf PS1) an der Komponente PS12, bevorzugt einpolymerisiertes Maleinsäureanhydrid oder ein einpolymerisiertes Maleinimid, insbesondere N-Phenylmaleinimid.

In einer weiteren bevorzugten Ausführungsform besteht die Komponente PS1) aus der Komponente PS11, insbesondere aus Styrol (PS111).

In einer weiteren Ausführungsform besteht die Komponente PS11 aus einpolymerisiertem alpha-Methylstyrol (PS12). In einer bevorzugten Ausführungsform besteht die Komponente PS11) aus einer einpolymerisierten Mischung von Styrol und alpha-Methylstyrol (PS113).

In einer bevorzugten Ausführungsform ist PS1) ein Styrol-co-Maleinsäureanhydrid-Polymer. In einer weiteren bevorzugten Ausführungsform ist PS1) ein Styrol-co-Phenylmaleinimid-Polymer.

In einer bevorzugten Ausführungsform besteht die Komponente PS) aus der Komponente PS1) (0 % PS2)).

In einer anderen bevorzugten Ausführungsform enthält die Komponente PS) ein Polymer PS1) und ein Polymer PS2) und besteht insbesondere zu 10 bis 90 Gew.-% (bezogen auf PS)) aus der Komponente PS1) und zu 90 bis 10 Gew.-% (bezogen auf PS)) aus der Komponente PS2), insbesondere SAN.

Geeignete von PS1) verschiedene Styrolpolymere (als Komponente PS2)) sind beispielsweise Styrol-Acrylnitril-Copolymere (SAN), Acrylnitril-Butadien-Styrol (ABS), Acrylnitril-Styrol-Acrylester (ASA). Bevorzugt sind SAN Polymere. Weiterhin geeignet als Komponente PS2) sind Terpolymere bestehend aus Styrol, Acrylnitril und Maleinsäureanhydrid.

Bevorzugt als Komponente PS2) sind Styrol-co-Acrylnitril-Polymere (SAN), insbesondere SAN-Typen erhältlich aus
- (PS21): 18 bis 40 Gew.-%, bevorzugt 25 bis 35 Gew.-%, besonders bevorzugt 30 bis 35 Gew.-% (bezogen auf PS2)) Acrylnitril und
- (PS22): 60 bis 82, bevorzugt 65 bis 75 Gew.-%, besonders bevorzugt 65 bis 70 Gew.-% (bezogen auf PS2) Styrol.

Erfindungsgemäß eingesetzte SAN-Typen weisen im Allgemeinen eine Schmelzvolumenrate MVR (220 °C/ 10 kg) nach ISO 113 im Bereich von 5 bis 25 cm³ / 10 min auf.

Geeignete SAN-Typen (P121) sind beispielsweise Polymere der BASF SE wie Luran 3380 und Luran 2580.

Weiterhin geeignet als Komponente PS2) sind AMSAN-Typen erhältlich aus
- (PS21): 18 bis 35 Gew.-%, bevorzugt 27 bis 33 Gew.-% (bezogen auf (PS2)) Acrylnitril und
- (PS23): 65 bis 82 Gew.-%, besonders bevorzugt 67 bis 73 Gew.-% (bezogen auf (P1)) alpha-Methylstyrol.

Weiterhin geeignet als Komponente PS2) sind (alpha-Methylstyrol/Styrol/Acrylnitril-Terpolymere), erhältlich aus
- (PS21): 18 bis 34 Gew.-% (bezogen auf (PS2)) Acrylnitril,
- (PS23): 61 bis 81 Gew.-% (bezogen auf (P1) alpha-Methylstyrol, und
- (PS22): 1 bis 15 Gew.-% (bezogen auf (P1) Styrol.

In einer bevorzugten Ausführungsform enthält die Komponente (P) kein (0 Gew.-%) thermoplastisches Polymer (PT). In dieser Ausführungsform besteht die Komponente PS) bevorzugt aus den Komponenten PS1) und PS2), d.h. der Anteil von PS2 ist # 0 Gew.-%.

In einer weiteren bevorzugten Ausführungsform enthält die Polymerkomponente P 0,1 bis 25 Gew.-%, besonders bevorzugt 0,5 bis 22 Gew.-% eines thermoplastischen Polymers PT (jeweils bezogen auf P). Bevorzugt enthält die Komponente PS) in diesem Fall keine Komponente PS2). Insbesondere besteht die Komponente PS) in diesem Fall aus Polystyrol und PS2) aus einer Polyphenylenether.

Als thermoplastische Polymere (PT) der Polymerkomponente P werden gegebenenfalls aromatische Polyether, Polyolefine, Polyacrylate, Polycarbonate (PC), Polyester, Polyamide, Polyethersulfone (PES), Polyetherketone (PEK), Polyethersulfide (PES) oder Mischungen davon eingesetzt.

Als aromatischer Polyether (PT) eignet sich z. B. Polyphenylenether (Poly(oxy-2,6-dimethyl-1,4-phenylen).

Geeignete Polyolefinen (als Komponente PT) sind beispielsweise Polypropylen (PP) Polyethylen (PE) und Polybutadien.

Ein geeignetes Polyacrylat (als Komponente PT) ist beispielsweise Polymethylmethacrylat (PMMA).

Geeignete Polyester (als Komponente P2) sind beispielsweise Polyethylenterephthalat (PET) und Polybutylenterephthalat (PBT).

Geeignete Polyamide (als Komponente P2) sind beispielsweise Polyamid 6 (PA6), Polyamid 6,6, Polyamid 6i und Polyamid 6/6.6.

Bevorzugt als Komponente (PT) sind aromatische Polyether, insbesondere Polyphenylenether.

Die Zusammensetzung der Polymerkomponente P kann entsprechend den gewünschten Eigenschaften des Granulats gewählt werden. Mit den erfindungsgemäß verwendeten Styrolpolymeren wird die Wärmeformbeständigkeit der aus dem Granulat erhältlichen Schaumformkörper verbessert.

Die Treibmittelkomponente (T) umfasst ein oder mehrere Treibmittel in einem Anteil von insgesamt 2 bis 10 Gew.-%, bevorzugt 2,5 bis 7 Gew.-%, besonders bevorzugt 2,5 bis 6 Gew.-%, bezogen auf (P). Als Treibmittel eignen sich z.B. aliphatische Kohlenwasserstoffe mit 2 bis 8, vorzugsweise mit 3 bis 8 Kohlenstoffatomen und Mischungen von 2 oder mehr solcher Kohlenwasserstoffe und/oder 2 oder mehr Isomeren solcher Kohlenwasserstoffe. Weiterhin geeignet sind z.B. halogenierte Kohlenwasserstoffe, N₂ und CO₂. Bevorzugt sind Butan- und Pentanisomere, wie iso-Butan, n-Butan, isoPentan, n-Pentan und deren Mischungen, insbesondere Pentanisomere, wie isoPentan und n-Pentan, und Mischungen solcher Isomere. Geeignet insbesondere als Cotreibmittel, vorzugsweise in einem Anteil von 0,1 bis 3,0 Gew.-%, bevorzugt von 0,2 bis 2,0 Gew.-%, insbesondere 0,5 bis 2,0 Gew.-% (bezogen auf (P)), sind (C₁-C₄)-Carbonylverbindungen, wie Ketone und Ester, C₁-C₄-Alkohole und C₁-C₄-Ether. Bevorzugt als Cotreibmittel sind Ketone, Alkohole und Ester, besonders bevorzugt Aceton, Ethanol und Methylformiat, ganz besonders bevorzugt Aceton und/oder Ethanol, insbesondere Aceton.

Treibmittel wie Stickstoff und Kohlendioxid können auch durch den Zerfall chemischer Treibmittel erzeugt werden. In einer Ausführungsform der Erfindung werden daher zusätzlich 0,1 bis 5,0 Gew.-% (bezogen auf P) an einem oder mehreren Treibmitteln zugesetzt. Beispiele für solche chemischen Treibmittel sind Azodicarbonamid, Sulfohydrazide wie 4,4-Oxybis-benzolsulfonylhydrazid, p-Toluolsulfonylhydrazid, Benzazimide, p-Toluolsulfonylhydrazid, Benzazimide, p-Toluolsulfonylsemicarbazid, Dinitrosopentamethylentetramin und Phenyltetrazol.

Besonders bevorzugt besteht die Treibmittelkomponente aus einem oder mehreren Pentanisomeren und Aceton, insbesondere 2 bis 4 Gew.-% an einem oder mehreren Pentanisomeren und 0,5 bis 3 Gew.-% Aceton (wobei sich die Gew.-% auf (P) beziehen).

Durch die geringe Löslichkeit aliphatischer Kohlenwasserstoffe in den Styrolpolymeren PS1, wie SMA, SPMI und SMAPMI, können niedrige Schüttdichten bereits bei geringen Treibmittelmengen erreicht werden. Zusätzlich vorteilhaft ist die Zugabe von hydrophileren Cotreibmitteln, die eine entsprechend höhere Löslichkeit in der Polymermatrix aufweisen. Beispielsweise kann durch den Einsatz von Aceton die Verschweißung und folglich die mechanischen Eigenschaften der Formteile verbessert werden.

Zur Verbesserung der Verschäumbarkeit können fein verteilte Innenwassertröpfchen in die Polymermatrix eingebracht werden. Dies kann beispielsweise durch die Zugabe von Wasser in die aufgeschmolzene Polymermatrix erfolgen. Die Zugabe des Wassers kann örtlich vor, mit oder nach der Treibmitteldosierung erfolgen. Eine homogene Verteilung des Wassers kann mittels dynamischen oder statischen Mischern erreicht werden. In der Regel sind 0 bis 2, bevorzugt 0,05 bis 1,5 Gew.-% Wasser, bezogen auf die gesamte Polymerkomponente, ausreichend. Bevorzugt enthält die treibmittelhaltige Polymermischung weniger als 0,5 Gew.-% [bezogen auf (P)] Wasser. Expandierbare Polymergranulate mit mindestens 90 % des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur. Bevorzugt enthält das expandierbare Granulat weniger als 0,5 Gew.-% Wasser [bezogen auf (P)].

Die erfindungsgemäßen expandierbaren Polymergranulate weisen in der Regel eine Schüttdichte von höchstens 700 g/l, bevorzugt 300 bis 700 g/l, besonders bevorzugt im Bereich von 500 bis 660 g/l auf. Bei Verwendung von Füllstoffen können in Abhängigkeit von der Art und Menge des Füllstoffes Schüttdichten im Bereich von 500 bis 1200 g/l auftreten.

Neben Polymer- (P) und Treibmittelkomponente (T) enthält das erfindungsgemäß eingesetzte Granulat vorzugsweise eine Additivkomponente (AK). Geeignete Additive sind dem Fachmann bekannt.

In einer bevorzugten Ausführungsform wird der Polymerkomponente (P) wenigstens ein Nukleierungsmittel zugesetzt. Als Nukleierungsmittel können z.B. feinteilige, anorganische Feststoffe wie Talkum, Siliziumdioxid, Mika, Ton, Zeolithe, Calciumcarbonat und/oder Polyethylenwachse eingesetzt werden in Mengen von im Allgemeinen 0,1 bis 10 Gew.-%, bevorzugt 0,1 bis 3 Gew.-%, besonders bevorzugt 0,1 bis 1,5 Gew.-%, bezogen auf (P), eingesetzt werden. Der mittlere Teilchendurchmesser des Nukleierungsmittel liegt in der Regel im Bereich von 0,01 bis 100 pm, bevorzugt 1 bis 60 µm. Ein besonders bevorzugtes Nukleierungsmittel ist Talkum, beispielsweise Talkum von der Firma Luzenac Pharma. Das Nukleierungsmittel kann nach dem Fachmann bekannten Methoden zugegeben werden.

Gewünschtenfalls können weitere Additive, wie Keimbildner, Füllstoffe (beispielsweise mineralische Füllstoffe, wie Glasfasern), Weichmacher, Flammschutzmittel, IR-Absorber, wie Ruß, Kokse, Graphene und/oder Graphit (natürlich und synthetisch), Aluminiumpulver und Titandioxid, lösliche und unlösliche Farbstoffe, Pigmente, UV-Stabilisatoren und/oder thermische Stabilisatoren zugegeben werden. Bevorzugte Additive sind Graphit und Ruß.

Besonders bevorzugt wird Graphit in Mengen von im Allgemeinen 0,05 bis 25 Gew.-%, insbesondere bevorzugt in Mengen von 2 bis 8 Gew.-%, bezogen auf (P), zugegeben. Geeignete Teilchengrößen für das eingesetzte Graphit liegen im Bereich von 1 bis 50 µm, bevorzugt im Bereich von 2 bis 10 µm.

Als vorteilhaft hat sich der Einsatz von UV-Stabilisatoren erwiesen. Speziell bei den Polymeren PS1) wie SMA führt starke UV-Einstrahlung zu einer sichtbaren Vergilbung und zur chemischen Umwandlung des Materials, die mit einer signifikanten Versprödung einhergeht. Für die Wahl geeigneter UV-Stabilisatoren spielt die Reaktivität, z.B. mit SMA, eine entscheidende Rolle. Während Stabilisatoren auf Basis von Benzotriazolen wie Tinuvin 234 die UV-Beständigkeit ohne Veränderung der Verarbeitungs- und Schaumeigenschaften verbessern kann, eignen sich Stabilisatoren auf Basis sterisch gehinderter Amine wie Uvinul 4050 und Tinuvin 770 in geringerem Maße für das erfindungsgemäße Stoffsystem.

Bevorzugt enthält das erfindungsgemäße Granulat als Additiv einen UV-Stabilisator in Mengen im Bereich von 0,05 bis 5 Gewichtsanteilen, besonders bevorzugt 0,1 bis 1 Gewichtsanteilen, bezogen auf 100 Gewichtsteile Polymer P.

Aufgrund der Brandschutzbestimmungen in verschiedenen Industrien werden vorzugsweise ein oder mehrere Flammschutzmittel zugegeben. Geeignete Flammschutzmittel sind beispielsweise Tetrabrombisphenol A, bromierte Polystyrol Oligomere, Tetrabrombisphenol-A-diallylether und Hexabromcyclododecan (HBCD), insbesondere die technischen Produkte, welche im Wesentlichen das α-, β- und γ-Isomer und einen Zusatz von Synergisten wie Dicumyl enthalten. Bevorzugt sind bromierte Aromaten, wie Tetrabrombisphenol A, und bromierte Styrololigomere. Als halogenfreie Flammschutzmittel eignen sich beispielsweise Blähgraphit, roter Phosphor und Phosphorverbindungen, wie Blähgraphit, roter Phosphor, Triphenylphosphat und 9,10-Dihydro-9-oxa-10-phosphaphenanthren-10-oxid.

Die Gesamtmenge an Additiven beträgt im Allgemeinen 0 bis 30 Gew.-%, vorzugsweise 0 bis 20 Gew.-%, bezogen auf das Gesamtgewicht des Extrusionsschaums.

Bevorzugt zur Wärmedämmung ist insbesondere die Zugabe von Graphit, Ruß, Koksen, Graphenen, Aluminiumpulver oder eines IR-Farbstoffs (z.B. Indoanilin-Farbstoffe, Oxonol-Farbstoffe oder Anthrachinon-Farbstoffe). Besonders bevorzugt sind Graphit und Ruß.

In der Regel werden die Farbstoffe und Pigmente in Mengen im Bereich von 0,01 bis 30, bevorzugt im Bereich von 1 bis 5 Gew.-% zugesetzt (bezogen auf P). Zur homogenen und mikrodispersen Verteilung der Pigmente in der Polymerschmelze kann es insbesondere bei polaren Pigmenten zweckmäßig sein, ein Dispergierhilfsmittel, z.B. Organosilane, Epoxygruppen-haltige Polymere oder Maleinsäureanhydrid-gepfropfte Styrolpolymere, einzusetzen. Bevorzugte Weichmacher sind Fettsäureester, Fettsäureamide und Phthalate, die in Mengen von 0,05 bis 10 Gew.-%, bezogen auf die Polymerkomponente P, eingesetzt werden können.

Zur Herstellung des erfindungsgemäßen Granulats und des daraus erhaltenen Partikelschaums wird das Treibmittel, vorzugsweise bei erhöhten Drücken, insbesondere von 20 bis 500 bar, bevorzugt bei 40 bis 280 bar, direkt in die Polymerschmelze eingemischt. Zudem kann ein bereits mit dem Treibmittel imprägniertes Polymermaterial eingesetzt werden, das vor der Zugabe des Treibmittels entgast wird oder bevorzugt mit dem Treibmittel aufgeschmolzen in den Prozess eingebracht wird. Ein mögliches Verfahren umfasst die Stufen a) Bereitstellung der Polymere, b) Schmelzerzeugung, c) Einbringung und Mischen der Treibmittel, d) Homogenisieren, e) gegebenenfalls Zugabe von Additiven und f) Granulieren. Jede der Stufen a) bis e) kann durch die in der Kunststoffverarbeitung bekannten Apparate oder Apparatekombinationen ausgeführt werden. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Zur Einmischung der Treibmittel eignen sich statische Mischer oder dynamische Mischer, beispielsweise Extruder. Zur Einstellung der gewünschten Schmelzetemperatur kann gegebenenfalls eine Kühlung der Schmelze vorgenommen werden. Dazu eignen sich die eingesetzten Mischaggregate, separaten Kühler oder Wärmeaustauscher. Die Granulierung erfolgt durch druckbeaufschlagte Granulierung in einer flüssigkeits-, insbesondere wassergefüllten Kammer. Damit wird eine Expansion der treibmittelhaltigen Schmelze beim Düsenaustritt zumindest teilweise unterdrückt. Zum Druckaufbau für die Düsen der Granulierung kann das Mischaggregat (Extruder) an sich oder eine zusätzliches, druckaufbauendes Schmelzeaggregat eingesetzt werden. Bevorzug wird eine Zahnradpumpe eingesetzt. Zur Durchführung des Verfahrens geeignete Apparateanordnungen sind beispielsweise, ohne darauf beschränkt zu sein:
- Polymerisationsreaktor - statischer Mischer/Kühler - Zahnradpumpe - Granulator
- Polymerisationsreaktor - Schmelzeextruder - Zahnradpumpe - Granulator
- Extruder - statischer Mischer - Granulator
- Extruder - Zahnradpumpe - Granulator
- Extruder - Zahnradpumpe - statischer Mischer - Granulator
- Extruder - statischer Mischer - Zahnradpumpe - Granulator
- Extruder - Granulator.
- Extruder - statischer Mischer - Zahnradpumpe - Granulator
- Extruder - Zahnradpumpe - statischer Mischer / Wärmetauscher - Zahnradpumpe - Granulator
- Extruder - statischer Mischer - Zahnradpumpe - statischer Mischer / Wärmetauscher - Zahnradpumpe - Granulator.

Weiterhin vorteilhaft ist die Schmelzeimprägnierung während des Extrusionsschritts durch Zugabe des Treibmittels im Extruder, wodurch Verweilzeit und thermische Belastung des Materials bei der Herstellung der Granulate deutlich vermindert werden können.

Weiterhin kann die Anordnung ein oder mehrere Seitenextruder oder Seitenbeschickungen zur Einbringung von weiteren Polymeren und Additiven, z.B. von Feststoffen oder thermisch empfindlichen Zusatzstoffen aufweisen. Zudem können flüssige Additive an jedem Ort des Verfahrens injiziert werden, bevorzugt im Bereich der statischen und dynamischen Mischaggregate.

Die treibmittelhaltige Polymerschmelze wird in der Regel mit einer Temperatur im Bereich von 120 bis 400 °C, bevorzugt 160 bis 350°C, besonders bevorzugt im Bereich von 170 bis 300 °C durch die Düsenplatte gefördert.

Die Düsenplatte wird bevorzugt auf mindestens 10 °C über der Temperatur der treibmittelhaltigen Polymerschmelze beheizt, um Polymerablagerungen in den Düsen zu verhindern und eine störungsfreie Granulierung zu gewährleisten. Bevorzugt liegt die Temperatur der Düsenplatte im Bereich von 10 bis 200°C, besonders bevorzugt 10 bis 120 °C über der Temperatur der treibmittelhaltigen Polymerschmelze.

Die Extrusion durch die Düsenplatte erfolgt in eine Kammer, die mit einer Flüssigkeit, bevorzugt Wasser, gefüllt ist. Die Temperatur der Flüssigkeit liegt bevorzugt im Bereich von 20 bis 95 °C, besonders bevorzugt 40 bis 80 °C.

Um marktfähige Granulatgrößen zu erhalten, liegt der Durchmesser (D) der Düsenbohrungen am Düsenaustritt bevorzugt im Bereich von 0,2 bis 2,0 mm, besonders bevorzugt im Bereich von 0,3 bis 1,5 mm, insbesondere im Bereich von 0,3 bis 1,0 mm. Damit lassen sich auch nach Strangaufweitung Granulatgrößen unter 2,5 mm, insbesondere im Bereich 0,4 bis 1,5 mm gezielt einstellen.

Bevorzugt ist ein Verfahren zur Herstellung eines erfindungsgemäßen Granulats, umfassend die Schritte
a) Her- oder Bereitstellen einer Schmelze der Polymerkomponenten PS) und gegebenenfalls PT),
b) Einmischen von mindestens einer Treibmittelkomponente und gegebenenfalls von Additiven, wie Wasser oder Talkum, in die Polymerschmelze mittels statischer oder dynamischer Mischer bei einer Temperatur von mindestens 150°C,
c) thermisches Homogenisieren und ggf. Kühlen der Treibmittel- und Polymerschmelze auf eine Temperatur von mindestens 120°C
d) Austrag durch eine Düsenplatte mit Bohrungen, deren Durchmesser am Düsenaustritt höchstens 1,5 mm beträgt,
e) Gegebenenfalls Zugabe von Additiven zu der Polymerkomponente P oder in mindestens einem der Schritte a), b), und/oder c),
f) Granulieren der treibmittelhaltigen Schmelze direkt hinter der Düsenplatte in einer Flüssigkeit, bevorzugt Wasser, bei einem Druck im Bereich von 1 bis 15 bar zu einem Granulat, dessen Partikel jeweils mindestens 10 Hohlräume pro mm³ im Größenbereich von 1 bis 200 µm enthalten.

Die erfindungsgemäßen Granulatpartikel wiesen jeweils mindestens 10 Hohlräume pro mm³ im Größenbereich von 1 bis 200 µm auf.

Dieser Parameter kann in dem Fachmann bekannter Weise durch Einstellen der Granulierbedingungen wie Düsentemperatur, Wassertemperatur, Druck, Messerdrehzahl, Wasserdurchsatz, gegebenenfalls unter Durchführung von Routineversuchen, verwirklicht werden. Ziel ist es dabei, ein vollständiges Aufschäumen der treibmittelhaltigen Schmelze zu unterdrücken, aber eine geringfügige Expansion zuzulassen. Dabei wird bevorzugt eine große Zahl von Hohlräumen durch begrenztes Anschäumen der Partikel angestrebt. Neben den Granulierparametern kann der Prozess auch durch die Geometrie der Düsenplatte und durch die Rezeptur, insbesondere durch Wahl der Matrixpolymere, der Treibmittel und Treibmittelmengen sowie durch Additive (insbesondere Nukleierungsmittel) gesteuert werden.

Durch die angeschäumten Strukturen kann im expandierbaren, treibmittelhaltigen Granulat eine zelluläre Morphologie eingestellt werden. Die mittlere Zellgröße im Zentrum der Partikel kann dabei größer als in den Randbereichen, die Dichte ist in den Randbereichen der Partikel höher sein. Dadurch werden Treibmittelverluste soweit wie möglich minimiert.

Durch die angeschäumten Strukturen ist eine deutliche bessere Zellgrößenverteilung und eine Reduzierung der Zellgröße nach dem Vorschäumen erzielbar. Zudem ist die benötigte Menge an Treibmittel zum Erreichen einer minimalen Schüttdichte geringer und die Lagerstabilität des Materials verbessert. Weiterhin ist eine deutliche Verkürzung der Vorschäumzeiten bei konstantem Treibmittelgehalt und eine deutliche Reduzierung der Treibmittelmengen bei gleichbleibenden Schäumzeiten und minimalen Schaumdichten möglich. Zudem wird durch die angeschäumten Strukturen die Produkthomogenität verbessert.

In einer bevorzugten Ausführungsform sind die expandierbaren Granulate mit einer oder mehreren Beschichtungskomponenten beschichtet, wobei diese Beschichtungskomponenten gegebenenfalls an einen porenhaltigen Feststoff adsorbiert sein können.

Als Beschichtungskomponenten eignen sich beispielsweise Glycerinester, Zinkstearat und Ester der Zitronensäure.

Bevorzugt sind die Mono-, Di- und Triglyceride, die aus Glycerin und Stearinsäure, Glycerin und 12-Hydroxystearinsäure und Glycerin und Ricinolsäure erhältlich sind, sowie gemischte Di- und Triglyceride, die neben Stearinsäure, 12-Hydroxystearinsäure und Ricinolsäure aus einer oder zwei Fettsäuren aus der Gruppe Ölsäure, Linolsäure, Linolensäure und Palmitinsäure erhältlich sind.

Besonders bevorzugt sind die entsprechenden Handelsprodukte, welche im Allgemeinen Mischungen der entsprechenden Mono-, Di- und Triester darstellen, die auch geringe Anteile an freiem Glycerin und freien Fettsäuren enthalten können, wie beispielsweise Glycerintri- oder Glycerinmonostearate.

Bevorzugt als Beschichtungsmaterial sind insbesondere Weichmacher aus der Gruppe bestehend aus a) einem oder mehreren Alkylestern von Cyclohexancarbonsäuren mit einem Siedepunkt ≥ 160 °C, b) einem oder mehreren C₁₀-C₂₁-Alkansulfonsäure-phenylestern mit einem Siedepunkt ≥ 150 °C und c) Mischungen der Komponenten a) und b).

Bevorzugt als Weichmacher a) sind Alkylester von Cyclohexancarbonsäuren der Formel (I), 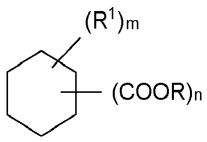 worin die Symbole und Indizes folgende Bedeutungen haben:
R¹ ist C₁-C₁₀-Alkyl oder C₃-C₈-Cycloalkyl; vorzugsweise C₁-C₁₀-Alkyl;
m ist 0, 1, 2 oder 3;
n ist 1, 2, 3 oder 4 und
R ist C₁-C₃₀-Alkyl.

Besonders bevorzugt haben die Symbole und Indizes in der Formel (I) folgende Bedeutungen:
m ist 0;
n ist 2 und
R ist C₈-C₁₀-Alkyl.

Insbesondere handelt es sich um 1,2-Cyclohexandicarbonsäurediisononylester, wie er zum Beispiel unter der Bezeichnung Hexamoll^{®} DINCH von der BASF SE (Ludwigshafen, Deutschland) vertrieben wird. Herstellung und Verwendung als Weichmacher sind beispielsweise in der WO99/32427 und der DE 20021356 beschrieben.

Weiterhin bevorzugt als Weichmacher sind Phenylester von (C₁₀-_C₂₁)-Alkylsulfonsäuren der Formel (II) (Komponente b)) 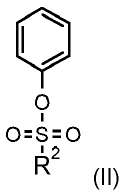 wobei
R² (C₁₀-C₂₁)-Alkyl, bevorzugt (C₁₃-C₁₇)-Alkyl, ist.

Bevorzugte Weichmacher b) sind Mischungen aus (C₁₀-C₂₁)-Alkansulfonsäure-phenylestern. Besonders bevorzugt ist dabei eine Mischung, die zu 75 bis 85 % aus einem Gemisch sekundärer Alkansulfonsäurephenylester besteht und zusätzlich 15 bis 25 % sekundäre Alkandisulfonsäurediphenylester sowie 2 bis 3 % nicht sulfonierte Alkane enthält, wobei die Alkylreste überwiegend unverzweigt sind und die Kettenlängen im Bereich von 10 bis 21, hauptsächlich von 13 bis 17, Kohlenstoffatomen liegen.

Solche Gemische werden zum Beispiel unter den Mesamoll^{®} Marken von der Lanxess AG (Leverkusen, Deutschland) vertrieben.

Bevorzugt wird der erfindungsgemäß eingesetzte Weichmacher in einer Menge von 0,01 bis 1 Gew.-%, bevorzugt 0,1-0.8 Gew.-%, besonders bevorzugt 0,2-0,5 Gew.-%, auf das expandierbare Granulat aufgebracht.

Die Beschichtung kann weitere Zusatzstoffe, wie Antistatika, Hydrophobisierungsmittel, Flammschutzmittel, feinteilige Kieselsäure und anorganische Füllstoffe enthalten. Der Anteil dieser Mittel hängt von des Art und Wirkung ab und beträgt für anorganische Füllstoffe in der Regel 0 bis 1 Gew.-%, bezogen auf beschichtete Polymerpartikel.

Als Antistatika kommen beispielsweise Verbindungen wie Emulgator K30 (Gemisch aus sekundären Natriumalkansulfonaten) oder Tensid 743 in Betracht.

Die expandierbaren Granulatpartikel können zu erfindungsgemäßen Schaumstoffen mit Dichten im Bereich von 5 bis 200 kg/m³, bevorzugt 40 bis 200 kg/m³ verarbeitet werden. Hierzu werden die expandierbaren Partikel vorgeschäumt. Dies geschieht zumeist durch Erwärmen mit Wasserdampf in sogenannten Vorschäumern. Die so vorgeschäumten Partikel werden danach zu Formköpern verschweißt. Hierzu werden die vorgeschäumten Partikel in nicht gasdicht schließende Formen gebracht und mit Wasserdampf beaufschlagt. Nach dem Abkühlen können die erfindungsgemäßen Formteile entnommen werden.

Erfindungsgemäße Partikelschaumformteile weisen bevorzugt eine Druckfestigkeit in alle drei Raumrichtungen von mindestens 200 kPa, bevorzugt mindestens 300 kPa, insbesondere mindestens 400 kPa, auf.

Partikelschaumformteile aus dem erfindungsgemäß hergestellten Granulat weisen bevorzugt im Allgemeinen eine Dichte von 40 bis 200 g/l auf, besonders bevorzugt von 50 bis 150 g/l, insbesondere bevorzugt von 70 bis 150 g/l. Bevorzugt weisen die Formteile eine maximale Dimensionsänderung von maximal 3 % bei thermischer Belastung von mindestens 100 °C auf. Solche Partikelschaumformteile weisen eine Zellzahl im Bereich 1 bis 30 Zellen pro mm, bevorzugt von 3 bis 20 Zellen pro mm, insbesondere von 3 bis 20 Zellen pro mm auf. Die erfindungsgemäßen Partikelschaumformteile weisen eine hohe Geschlossenzelligkeit auf, wobei in der Regel mehr als 60%, bevorzugt mehr als 70%, besonders bevorzugt mehr als 80% der Zellen der einzelnen Schaumpartikel geschlossenzellig sind (bestimmt nach ISO 4590).

Die erfindungsgemäßen Schäume und Formteile finden vorzugsweise Verwendung als Isolationsmaterial für technische Anwendungen und den Baubereich sowie insbesondere in Verbundformteilen für den Möbelbau. Weitere Anwendungen liegen in der Automobilindustrie, im Boots- und/oder Schiffsbau, beim Bau von Windkraftanlagen und im Messebau.

Für die Anwendungen im Möbelbau wird auf die erhaltenen Schaumformteile, welche in Form einer Schaumplatte vorliegen, nach bekannten, dem Fachmann geläufigen Methoden mindestens eine weitere Schicht aufgebracht. Auf diese Weise erhaltene Verbundformteile sind ebenfalls Gegenstand der Erfindung.

Neben einer ersten Schicht aus der beschriebenen Schaumplatte enthalten die erfindungsgemäßen Verbundformteile mindestens eine weitere Schicht. Bevorzugt ist die erste Schicht wenigstens auf zwei Flächen mit einer oder mehreren weiteren Schichten verbunden. Weiterhin bevorzugt ist die erste Schicht auf mindestens zwei Flächen (im Fall eines rechtwinkligen Querschnitts oben und unten), ebenso bevorzugt sind alle Flächen mit einer oder mehreren weiteren Schichten verbunden.

In einer Ausführungsform der Erfindung besteht der Aufbau des Verbundformteils aus einer oder mehreren Kernschichten, einer oder mehreren Deckschichten und einer Oberflächenschicht.

In einer weiteren Ausführungsform der Erfindung besteht der Aufbau des Verbundformteils aus einer Kernschicht und einer Oberflächenschicht.

Zur Beplankung als Oberflächen- und gegebenenfalls Deckschicht sind beispielsweise Aminoplastharzfilme, insbesondere Melaminfilme, PVC (Polyvinylchlorid), Glasfaserverstärkter Kunststoff (GFK), beispielsweise ein Verbund aus Polyesterharz, Epoxiharz, oder Polyamid und Glasfasern, Vorimprägnate, Folien, Laminate, beispielsweise HPL (high pressure laminate) und CPL (continuous pressure laminate), Furniere, und Metall-, insbesondere Aluminium- oder Bleibeschichtungen, geeignet. Weiterhin geeignet sind Gewebe und Vliesstoffe, insbesondere aus Natur- und/oder Kunstfasern.

Weiterhin kommen für eine Beplankung der erfindungsgemäßen Formteile(n) alle Werkstoffe in Betracht, die aus Holzstreifen, Holzfasern, Holzspänen, Hölzern, Holzfurnieren, verleimten Hölzern, Furnieren oder einer Kombination der entsprechenden Herstellungsverfahren gefertigt sind, wie Furnierplatten oder Sperrholzplatten, aus Holzspänen hergestellte Holzwerkstoffe, beispielsweise Spanplatten oder OSB-Platten (oriented strand boards, Grobspanplatten), sowie Holzfaserwerkstoffe wie LDF-, MDF-und HDF-Platten. Diese Holzwerkstoffe werden aus den entsprechenden Holzpartikeln unter Zugabe von natürlichen und/oder synthetischen Bindemitteln durch Heißverpressung hergestellt.

Ebenfalls bevorzugt ist eine Beplankung der erfindungsgemäßen Formteile(n) mit OSB, Spanplatten, HDF (hochdichte Faserplatten) oder MDF (mitteldichten Faserplatten), insbesondere dünnen Spanplatten, HDF und MDF mit einer Dicke von 2 bis 10 mm.

Besonders bevorzugt sind Spanplatten oder MDF/HDF, die gegebenenfalls einseitig oberflächenvergütet sind, d.h. durch Lackierung, Furnierung, einen aufgebrachten Film (Melaminfilm) oder Laminat.

Die Beplankung erfolgt nach bekannten, dem Fachmann geläufigen Methoden. Die Oberflächenschicht wird z.B. nach dem Fachmann bekannten Verfahren mit der erfindungsgemäßen Formteile(n) verpresst.

Beispielsweise kann im Fall einer MDF-Platte die Leimflotte auf die erfindungsgemäße Kernschicht aufgetragen, die Platte aufgelegt und unter Temperatur und Druck verpresst werden.

Der Pressdruck liegt typischerweise unterhalb von 100 bar, die Presszeit beträgt üblicherweise bis zu 15 Minuten und die Presstemperatur liegt in der Regel bei maximal 100°C.

Als Klebstoffe können übliche Materialien, beispielsweise Dispersionsklebstoffe z.B. Weißleim, Epoxidharze, Formaldehyd-Kondensationsharze, wie Phenolharze, Harnstoff-Formaldehyd-Harze, Melamin-Formaldehyd-Harze, Melamin-Harnstoff-Formaldehyd-Harze, Resorcin- und Phenolresorcinharze, Isocyanatklebstoffe, Polyurethanklebstoffe und Schmelzkleber verwendet werden.

Falls eine oder mehrere Schichten des Verbundformteils aus Materialien bestehen, bei denen es zur Emission von Formaldehyd kommen kann, ist es vorteilhaft, die entsprechende Schicht oder das Verbundformteil einer Polyaminbehandlung, wie sie in der WO 2007/082837 beschrieben ist, zu unterziehen.

Das erfindungsgemäße Verbundformteil kann nach dem Aufbringen der Oberflächenschicht beispielsweise durch Schneiden auf das Plattenformat und Kalibrieren fertig gestellt werden.

In einer bevorzugten Ausführungsform ist das Verbundformteil als Sandwichplatte, z. B. für den Möbelbau ausgebildet. Eine solche Platte, bei der zumindest eine Seitenlänge ein Vielfaches der Höhe beträgt, enthält eine oder mehrere Kernschichten, von denen mindestens eine aus dem erfindungsgemäßen Schaumkern besteht, gegebenenfalls eine oder mehrere Zwischen- oder Funktionsschichten und eine oder mehrere Deckschichten, welche die obere und untere Fläche der Platte bedecken. Ebenfalls können auch eine oder mehrere Kanten der Sandwichplatte beschichtet werden.

In einer bevorzugten Ausführungsform sind die Kanten nicht beschichtet, da diese Beschichtung für die gewünschte spätere Anwendung individualisiert wird und zu einem späteren Zeitpunkt als die Herstellung der Sandwichplatte erfolgt.

Die Deckschicht(en) werden bevorzugt aus den vorstehend aufgeführten Materialien gewählt.

Die Sandwichplatte kann beispielsweise neben der oder den Kernschichten beispielsweise Funktionsschichten enthalten, die eine weitere Verarbeitung, beispielsweise das Anbringen/Einbringen von Befestigungselementen erleichtern.

Die erfindungsgemäße Kernschicht ist leicht, homogen, hydrophob, wärmbeständig, in alle Richtungen druckunempfindlich und hat einen Ausdehnungskoeffizienten, der in Längs- und in Querrichtung gleich ist. Sie kann mit Standardleimen und -klebern fest verbunden werden.

Die erfindungsgemäßen Verbundformteile zeigen eine Kombination aus:
- Homogenität
- hoher Druckfestigkeit in allen Richtungen (keine Pressprobleme mit üblichen Drücken bei der Flächenverpressung, keine Abzeichnung auf Flächen von Stegen, Hohlstellen, etc., Standhaltung von üblichem Oberdruck bei Kantenleimmaschinen, die Schaumdichte ermöglicht ein einwandfreies Anfahren und Betreiben der Aggregate von Kantenleimmaschinen (bündig Fräsen, Profilieren, Schleifen, Kappen)
- vernetzter Struktur (ausrissfreier Format-Sägeschnitt mit Standard Maschinen und Werkzeugen)
- wärmebeständig (Kante kann mit Schmelzkleber mit Schmelztemperaturen von 190 °C mit Standard Kantenaggregaten beschichtet werden)
- geeignet für die Flächenbeschichtung mit nicht saugenden Materialien in einer Hot-Melt-Anlage
- geringe NOₓ-Emissionen beim Verbrennen.

Dies bedeutet einen erheblichen Vorteil bei einem Standard Leichtplattenbauteil, beispielsweise einem Regalboden mit den Maßen 1 m x 0,40 m x 40 mm, bei dem der Kern mit 2 x 4 mm HDF beschichtet ist.

Demgegenüber bieten die Platten mit Hohlkammerstegen/Waben aus dem Stand der Technik keine geschlossenen Kantenflächen. Nur die beiden Deckflächen, welche in der Regel aus 4-8 mm Span oder MDF/HDF bestehen (und den wenigen dazwischen liegenden Stegen bei Stegplatten) bieten Leimflächen. Weiterhin ist die Leimhaftung sehr beschränkt, es können nur Kanten ab mind. 1,5 mm Stärke verarbeitet werden. Es zeichnen sich die Hohlflächen auch bei diesen Stärken ab, die Kanten klingen hohl und es können keine handelsüblichen Beschläge befestigt werden.

Ein besonderer Vorteil ist, dass durch die neuen Materialien eine erheblich leichtere Bearbeitung der Kanten möglich ist, was von großem Vorteil ist, da die Betriebe, in denen eine Beschichtung der Kanten erfolgt oft nicht über die speziellen Techniken und Vorrichtungen der Plattenhersteller verfügen.

Die genannten Vorteile erleichtern sowohl das Beschichten der Kanten als auch das Anbringen von Verbindungs- und Befestigungselementen.

Ein weiterer Vorteil der erfindungsgemäßen Verbundformteile ist, dass die Homogenität der erfindungsgemäßen Kernschicht die Verwendung der üblicherweise im Holzbau eingesetzten Maschinen zum Fräsen, Bohren, Sägen und Hobeln erlaubt. Auch dies ist von großem Vorteil, da die Betriebe, in denen die Bearbeitung der erfindungsgemäßen Verbundformteile stattfindet, ihre bereits vorhandenen Maschinen einsetzen können.

Das erfindungsgemäße Verbundformteil weist bevorzugt eine Dichte im Bereich von 50 bis 400 g/l, besonders bevorzugt 100 bis 350 g/l, insbesondere 150 bis 300 g/l auf.

Bevorzugt enthält das erfindungsgemäße Verbundformteil keine Rahmenkonstruktion.

Das erfindungsgemäße Verbundformteil wird bevorzugt zur Herstellung von Möbeln, Tür-, Raum-, Wand-, Decken-, Trenn- oder Fußbodenelementen, z.B. im Hausbau, im Trockenausbau oder im Innenausbau, beispielsweise als Laminat, Dämmstoff, Platte oder Verpackungsmaterial eingesetzt. Bevorzugt ist auch eine Anwendung im Messebau, Automobilbau, z.B. für Wohnmobile, Bootsbau, Yachtbau und Schiffsbau.

Die Erfindung wird durch die Beispiele näher erläutert, ohne sie dadurch beschränken zu wollen.

### Beispiele:

Einsatzstoffe:
- Luran HH120: AMSAN mit einem Acrylnitrilgehalt von 31 Gew.-% und einer Viskositätszahl von 57 ml/g(Handelsprodukt der BASF SE)
- Luran 3380: SAN mit einem Acrylnitrilgehalt von 33 Gew.-% und einer Viskositätszahl von 80 ml/g (Handelsprodukt der BASF SE)
- Luran 2580: SAN mit einem Acrylnitrilgehalt von 25 Gew.-% und einer Viskositätszahl von 80 ml/g (Handelsprodukt der BASF SE)
- Talkum: Talkum IT Extra, Luzenac Pharma
- 158 K: Polystyrol mit einer Viskositätszahl von 93 - 98 ml/g (Handelsprodukt der BASF SE)
Polyphenylenether: PX 100F (Mitsubishi Engineering Plastics)
Styrol-co-Maleinsäureanhydrid (SMA): Xiran 28065 (Polyscope)
Styrol-co-N-Phenylmaleinimid (SPMI): Denka IP (Denka)

**Tabelle 1: Stickstoffgehalt von Schaumkernen unterschiedlicher Polymerzusammensetzung (berechnet aus der Polymerzusammensetzung):**

| Bsp. | Polymerzusammensetzung | N-Gehalt Schaumkem |
|---|---|---|
| | | [Gew.-%] |
| V1 | 50% Luran 3380, 50% Luran HH 120 | 8,3 |
| V2 | 100% Luran 3380 | 8,5 |
| 1 | 80% PS 158K, 20% PPE PX 100F | 0,0 |
| 2 | 80% Luran 2580, 20% Xiran 28065 | 5,3 |
| 3 | 85% Luran 3380, 15% Denka IP | 7,8 |

| | | |
|---|---|---|
| V= Vergleichsbeispiel | | |

### Allgemeine Vorschrift zu Herstellung der Partikelschäume:

In einem Zweischneckenextruder der Firma Leitritz ZSK 18 wurden die Polymere aufgeschmolzen. Anschließend wurde die Polymerschmelze mit 4,5 Gew.-% Pentan S, bezogen auf die Polymermatrix, beladen. Danach wurde die Polymerschmelze in zwei statischen Mischern homogenisiert und abgekühlt. Zu dem treibmittelbeladenen Hauptschmelzestrom wurde über einen Seitenextruder 0,2 Gew.-% Luwax AH3, bezogen auf die Polymermatrix, als Nukleierungsmittel zugegeben. Nach Homogenisierung über zwei weitere statische Mischer wurde die Schmelze gekühlt und durch eine beheizte Lochplatte extrudiert. Der Polymerstrang wurde mittels Unterwassergranulierung abgeschlagen, so dass ein treibmittelbeladenes Minigranulat mit enger Teilchengrößenverteilung (d' = 1,2 mm) erhalten wurde.

Das treibmittelhaltige Granulat wurde in einem EPS-Vorschäumer zu Schaumperlen vorgeschäumt und in einem EPS-Formteilautomaten zu Formteilen verarbeitet.

### Allgemeine Vorschrift zur Herstellung von Sandwichelementen:

Eine Schaumstoffplatte wird mit einem Kleber (z.B. Kauritleim) beidseitig bestrichen und mit zwei MDF-Platten (Homanit GmbH & Co KG, Herzberg am Harz, Deutschland) beklebt. Leimauftrag: 200 g/m²; Pressbedingungen: 90 bis 95 °C und 100 atü.

### Bekantung von Sandwichelementen:

An eine 0.8 m x 0.6 m x 38 mm große Sandwichplatte bestehend aus 30 mm Schaumkern und jeweils 2 x 4 mm MDF werden Furnierkanten von der Rolle mit einem Kantenschmelzklebeaggregat (KFL 520 der Firma Homag, Schopfloch, Deutschland) angeleimt.

**Tabelle 2: Bekantung von Sandwichelementen (4 mm MDF, 30 mm Schaumkern, 4 mm MDF) bei einer Dichte des Kernmaterials von 80 g/l:**

| Bsp. | Kernmaterial | Vicat [°C] | Bekantung |
|---|---|---|---|
| V1 | PS 158K | 100 | - |
| V2 | Luran 3380 | 108 | 0 |
| 1 | 80% PS 158K, 20% PPE PX 100F | 118 | + |
| 2 | 80% Luran 3380, 20% Xiran 28065 | 119 | + |
| 3 | 85% Luran 3380, 15% Denka IP | 118 | + |

| | | | |
|---|---|---|---|
| Bewertung des Schaums unter der Kante: -: Schaum eingefallen; o: Schaum teilweise eingefallen; +: Schaum nicht eingefallen | | | |

**Tabelle 3: Bekantung von Sandwichelementen (4 mm MDF, 30 mm Schaumkern, 4 mm MDF):**

| Bsp. | Kernmaterial | Dichte | Bekantung |
|---|---|---|---|
| | | [g/L] | |
| V3 | 80% PS 158K, 20% PPE PX 100F | 33 | - |
| 1 | 80% PS 158K, 20% PPE PX 100F | 52 | + |
| 2 | 80% PS 158K, 20% PPE PX 100F | 70 | + |
| 3 | 80% PS 158K, 20% PPE PX 100F | 92 | + |

| | | | |
|---|---|---|---|
| Bewertung des Schaums unter der Kante: -: Schaum eingefallen; o: Schaum teilweise eingefallen; +: Schaum nicht eingefallen | | | |

## Patentansprüche

1. Expandierbares Granulat (G) mit einem Stickstoffanteil von ≤ 8 Gew.-% [bezogen auf (G)], dessen Partikel jeweils mindestens 10 Hohlräume pro mm³ im Größenbereich von 1 bis 200 µm enthalten und das eine Polymerkomponente (P) mit einer Glasübergangstemperatur von > 105 °C enthält, gebildet aus
PS) 75 bis 100 Gew.-% (bezogen auf P) einer Styrolpolymerkomponente, die gebildet ist aus
PS1) 10 bis 100 Gew.-% (bezogen auf P) an einem oder mehreren Styrolpolymeren, enthaltend jeweils
PS11) 60 bis 100 Gew.-% (bezogen auf PS1) einpolymerisiertes Styrol (PS111) oder alpha-Methylstyrol (PS112) oder eine einpolymerisierte Mischung aus alpha-Methylstyrol und Styrol (PS113),
PS12) 0 bis 40 Gew.-% (bezogen auf PS1) mindestens eines einpolymerisierten Monomers aus der Gruppe Maleinsäureanhydrid, Maleinimide, (C₁-C₁₀)-Alkyl(meth)acrylate und (Meth)acrylsäure,
PS2) 0 bis 90 Gew.-% (bezogen auf P) an einem oder mehreren von PS1 unterschiedlichen Styrolcopolymeren, enthaltend
PS21) 60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
PS22) 18 bis 40 Gew.% (bezogen auf PS2) einpolymerisiertes Acrylnitril
und
PT) 0 bis 25 Gew.-% (bezogen auf P) an einem oder mehreren thermoplastischen Polymeren aus der Gruppe bestehend aus aromatischen Polyethern, Polyolefinen, Polyacrylaten, Polycarbonaten (PC), Polyestern, Polyamiden, Polyethersulfonen (PES), Polyetherketonen (PEK) und Polyethersulfiden (PES),
mit der Maßgabe, dass neben der Komponente PS11) mindestens eine der Komponenten PS12), PS2) und PT in einem Anteil von mindestens 5 Gew.-% (bezogen jeweils auf PS1), PS beziehungsweise P) vorhanden sein muss.

2. Expandierbares Granulat gemäß Anspruch 1, wobei die expandierbaren Granulatpartikel eine mittlere Partikelgröße im Bereich von 0,2 bis 2,5 mm aufweisen.

3. Expandierbares Granulat gemäß Anspruch 1 oder 2, wobei die Komponente PS1) ein Styrol-co-Maleinsäureanhydrid-Polymer ist.

4. Expandierbares Granulat gemäß Anspruch 1 oder 2, wobei die Komponente PS1) ein Styrol-co-Phenylmaleinimid-Polymer ist.

5. Expandierbares Granulat gemäß Anspruch 1 oder 2, wobei die Komponente PS2) ein Styrol-co-Acrylnitril-Polymer ist.

6. Expandierbares Granulat gemäß einem der Ansprüche 1 bis 5, wobei die Komponente PS) ein Polymer PS1) und ein Polymer PS2) enthält.

7. Expandierbares Granulat gemäß einem der Ansprüche 1 bis 6, wobei die Polymerkomponente P aus der Komponente PS) und diese aus den Komponenten PS1) und PS2) besteht.

8. Expandierbares Granulat gemäß Anspruch 1 oder 2, wobei die Komponente PS) aus Polystyrol und die Komponente PT) aus Polyphenylenether besteht.

9. Verfahren zur Herstellung eines Granulats gemäß einem der Ansprüche 1 bis 8, umfassend die Schritte:
a) Bereitstellen einer Polymerkomponente (P), mit einer Glasübergangstemperatur von > 105 °C gebildet aus
PS) 75 bis 100 Gew.-% (bezogen auf P) einer Styrolpolymerkomponente, die gebildet ist aus
PS1) 10 bis 100 Gew.-% (bezogen auf P) an einem oder mehreren Styrolpolymeren, enthaltend jeweils
PS11) 60 bis 100 Gew.-% (bezogen auf PS1) einpolymerisiertes Styrol (PS111) oder alpha-Methylstyrol (PS112) oder eine einpolymerisierte Mischung aus alpha-Methylstyrol und Styrol (PS113),
PS12) 0 bis 40 Gew.-% (bezogen auf PS1) mindestens eines einpolymerisierten Monomers aus der Gruppe Maleinsäureanhydrid, Maleinimide, (C₁-C₁₀)-Alkyl(meth)acrylate und (Meth)acrylsäure,
PS2) 0 bis 90 Gew.-% (bezogen auf P) an einem oder mehreren von PS1 unterschiedlichen Styrolcopolymeren, enthaltend
PS21) 60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
PS22) 18 bis 40 Gew.% (bezogen auf PS2) einpolymerisiertes Acrylnitril
und
PT) 0 bis 25 Gew.-% (bezogen auf P) an einem oder mehreren thermoplastischen Polymeren aus der Gruppe bestehend aus aromatischen Polyethern, Polyolefinen, Polyacrylaten, Polycarbonaten (PC), Polyestern, Polyamiden, Polyethersulfonen (PES), Polyetherketonen (PEK) und Polyethersulfiden (PES),
mit der Maßgabe, dass neben der Komponente PS11) mindestens eine der Komponenten PS12), PS2) und PT in einem Anteil von mindestens 5 Gew.-% (bezogen jeweils auf PS1), PS beziehungsweise P) vorhanden sein muss,
(b) Erhitzen der Polymerkomponente (P) zur Ausbildung einer Polymerschmelze,
(c) Einbringen von 1 bis 10 Gew.-% (bezogen auf P) einer physikalischen Treibmittelkomponente (T), in die Polymerschmelze zur Ausbildung einer schäumbaren Schmelze,
(d) Homogenisieren der Mischung,
(e) gegebenenfalls Zugabe von Additiven zu der Polymerkomponente P in mindestens einem der Schritte a), b), c) und/oder d),
(f) Extrusion der treibmittelhaltigen Polymerschmelze durch eine Düsenplatte,
(g) Granulieren der treibmitteilhaltigen Schmelze in einer flüssigkeitsgefüllten Kammer unter einem Druck von 1,5 bis 15 bar zu einem Granulat, dessen Partikel jeweils mindestens 10 Hohlräume pro mm³ im Größenbereich von 1 bis 200 µm enthalten,
wobei der Stickstoffgehalt des fertigen Granulats ≤ 8 Gew.-% beträgt.

10. Schaumformteil mit einer Dichte im Bereich von 40 bis 200 g/l, erhältlich aus einem expandierbaren Granulat gemäß einem der Ansprüche 1 bis 8.

11. Verwendung des Schaumformteils gemäß Anspruch 10 als Isoliermaterial für technische Anwendungen und den Baubereich oder als Schaumelement für Leichtbau- und Verbundanwendungen.

12. Verbundformteil, enthaltend eine erste Schicht und eine oder mehrere weitere mit der ersten Schicht verbundene Schichten, wobei die erste Schicht als ein Schaumformteil gemäß Anspruch 10 mit einer Zellzahl von 1-30 Zellen pro mm, einer Dichte von 40-200 g/l und einem Stickstoffgehalt von ≤ 8 Gew.-% (bezogen auf das Partikelschaumformteil) ausgebildet ist.

13. Verbundformteil nach Anspruch 12, wobei mindestens eine weitere Schicht aus Aluminium, High Pressure Laminate, Holzfurnier, GFK, Kunstharz oder PVC besteht.

14. Verwendung des Verbundformteils gemäß Anspruch 12 oder 13 im Möbelbau.

15. Verwendung des Verbundformteils gemäß Anspruch 12 oder 13 in der Automobilindustrie, im Boots- und/oder Schiffbau, beim Bau von Wndkraftanlagen und im Messebereich.
